# EUROPEAN PATENT SPECIFICATION

(11) **EP 3 806 513 B1**
(45) Date of publication and mention of the grant of the patent: **25.03.2026**
(21) Application number: 18921705.2
(22) Date of filing: 12.09.2018
(51) Int. Cl.: G06V 30/40

(54) **SYSTEM FOR REMOTELY LOGGING IN USERS OF A MOBILE NETWORK**
SYSTEM ZUR FERNANMELDUNG VON BENUTZERN EINES MOBILFUNKNETZES
SYSTÈME D'ENREGISTREMENT À DISTANCE DES UTILISATEURS DE RÉSEAU MOBILE

(30) Priority: 06.06.2018 RU 2018120919
(43) Date of publication of application: 14.04.2021
(73) Proprietor: Dagirov, Vitalij Borisovich, Respublika Bashkortostan, 453804 (RU)
(72) Inventor: Dagirov, Vitalij Borisovich, Respublika Bashkortostan, 453804 (RU)
(74) Representative: Gallo, Luca
(86) International application number: PCT/RU2018/000599
(87) International publication number: WO 2019/235962

(56) References cited:
- EP-A1- 3 220 311
- WO-A1-2017/076226
- WO-A2-2017/026924
- CN-A- 103 914 686
- US-A1- 2015 221 228
- US-A1- 2016 063 235
- US-B2- 9 961 077
- DE LAS HERAS LLUIS-PERE ET AL: "Use case visual Bag-of-Words techniques for camera based identity document classification", 2015 13TH INTERNATIONAL CONFERENCE ON DOCUMENT ANALYSIS AND RECOGNITION (ICDAR), IEEE, 23 August 2015 (2015-08-23), pages 721 - 725, XP032814871, [retrieved on 20151120], DOI: 10.1109/ICDAR.2015.7333856

## Description

### Field of the invention

The invention relates to the field of mobile communication, in particular, to a system and a method for remote registering and authenticating a user in a mobile network.

### Background of the invention

Connection of users to a mobile network is typically provided by disposing a SIM (Subscriber Identity Module) card in a special device (for example, a mobile phone, smartphone, or tablet that supports such function) and by an interaction between the SIM card in the device and the devices that provide for the operation of the network. Apart from that, in accordance with par. 18 of the Decree of the Government of the Russian Federation dated Dec 09, 2014 No. 1342 (as amended on Feb 03, 2016) titled "About the procedure for rendering telephone services" (together with "Rules for rendering telephone services"), a user has to show an identity document (typically a passport) when a mobile communication services agreement is concluded between a mobile network carrier and the user and, consequently, when a SIM card is obtained by the user from the carrier. In accordance with par. 6 of Article 44 of the Federal law dated July 07, 2003 No. 126-FZ (as amended on June 07, 2017) titled "About communications", the carrier (or a representative thereof), when concluding an agreement, is obliged to include into the agreement the user information (typically passport data). Moreover, the carrier is obliged to check the accuracy of the user information. This typically requires a personal contact between the user and the carrier's representative, for example, in the carrier's sales office.

The prior art provides a method and a system for getting an SIM card from a long distance (document WO 2017/076226 A1). The method comprises the following steps: data acquisition, an operator provides an online window for acquiring identity authentication information filled out by a smart device user; and examination and verification, the operator examines and verifies the identity and number of the user according to an order generated by the information filled out by the user, comprising performing image authentication by means of technologies including image identification and face identification. By means of the technical solution of the present invention, a user can implement operations of getting a card and changing the card completely on the internet, and the security is improved by means of identity authentication.

The prior art also provides a method and an apparatus for video authentication of a user (patent RU 2504004, published on Jan 10, 2014). The technical solution envisages acquiring a video capture device of a user's contrast image by generating it from video image frames, sending the contrast image to the server, and comparing the acquired contrast image with the user information pre-uploaded to the server using a special service or software. The authentication photo acquired during the registration of a user to the system by the same method as the one used for acquiring the contrast image, or uploaded from an external source is used as the user information. The user information may further include user's gender and age information entered by the user during registration. Apart from that, the contrast photo can further be checked for conformity to gender and age information.

The disadvantage of said technical solution is that the verification of the user's identity is technically impossible during registration, as video identification takes place only during re-authentication, whereas only user data is uploaded during registration.

The closest technical solution (prototype) is a method for registering and activating a SIM card (http://beelinenet.ru/registration, accessed on Oct 10, 2017). The method is intended for registering and activating a Beeline SIM card over the Internet. To this end, one needs to insert a SIM card into a device (tablet, phone, or modem), open the browser, and enter any address. When an attempt is made to go to the entered address, the SIM card is authenticated in the mobile network. If the SIM card cannot be authenticated in the mobile network, i.e. the SIM card has not been registrated in the mobile network, the device's browser automatically redirects to a website where the SIM card can be registered. To this end, the SIM card owner information (passport data) is entered in the carrier's databases by entering this information in special forms on the website and subsequently by sending it to the carrier's devices that provide for its processing. In this case, when entering the information, there is neither a check of the accuracy of the information, nor a check that the information is associated with the person carrying out the registration. Also, the SIM card identification information is entered in the carrier's databases and is matched to the user information. As a result, the SIM card is registered in a mobile network (the carrier's databases contain information about the SIM card and its owner), which allows it to be authenticated and used in a mobile communication device.

The disadvantage of the prototype is that the verification of the user's identity is technically impossible, i.e. there is no verification of the fact that the SIM card is actually being registered to the person carrying out the registration. Furthermore, the prototype provides a low speed of user registration due to all the information being entered completely manually.

The technical result of the proposed invention consists in extending the range of functional possibilities of the device by providing confirmation of the identity of a mobile user, including during initial registration.

Said technical result is achieved due to the fact that in the system for remote registration of mobile users, comprising an identification data module, a photo capture module, a touch screen, a first processing unit, a first management unit, a first memory unit, a second processing unit, a second management unit, a second memory unit, and two receiving-transmitting units, the touch screen being configured for entering text data and to convert the tactile force when a person signs on this touch screen into a file of a relevant graphic format, the photo capture module being configured to produce a file of a relevant graphic format corresponding to the photo image of a document, a file of a relevant graphic format corresponding to the photo image of a code, and a file of a relevant graphic format corresponding to the video image of a person, the second processing unit being configured to recognize a code in the file corresponding to the photo image of a code, to recognize the photo image of a person and text data in the file corresponding to the photo image of a document, to recognize the photo image of a person in the file corresponding to the video image of a person, to compare the recognized photo image of a person from the file corresponding to the image of a document with one of the recognized photo images of a person in the file corresponding to the video image of a person, to compare the photo images of a person in the file corresponding to the video image of a person to verify that this is the image of a living person in reality at the time of photo capture, to recognize the signs of authenticity of a document, wherein the first processing unit is connected and configured to acquire signals from the identification data module, the photo capture module and the touch screen, the first memory unit is connected and configured to acquire signals from the first processing unit, the photo capture module and the touch screen, one of the receiving-transmitting units is connected and configured to acquire signals from the first processing unit and the first memory unit and to transmit the signals acquired from the other receiving-transmitting unit to the first management unit and the first processing unit, the first management unit is connected and configured to transmit management signals to the photo capture module, the touch screen, the first processing unit, the first memory unit; the second processing unit is connected and configured to acquire signals from the other receiving-transmitting unit, the second memory unit is connected and configured to acquire signals from the second processing unit, the other receiving-transmitting unit is connected and configured to acquire signals from the second processing unit, the second management unit is connected and configured to transmit management signals to the second processing unit and the second memory unit, the receiving-transmitting units are configured to exchange signals between each other by means of transmission of radio signals. The rest of the features of the claimed invention are set out in the appended set of claims.

### Disclosure of the invention

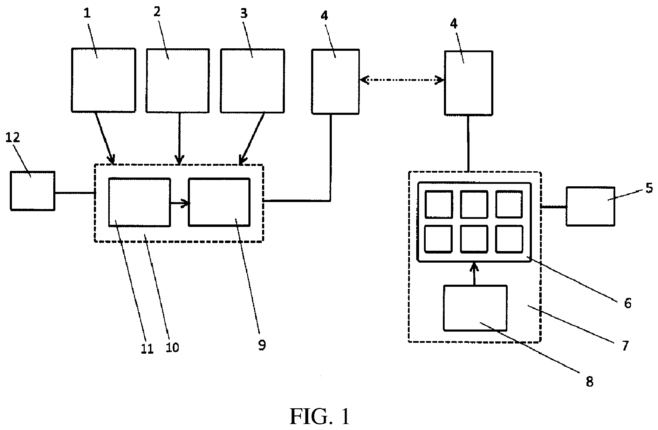

The drawing shows: a touch screen 1, a photo capture module 2, an identification data module 3, a receiving-transmitting unit 4, a second memory unit 5, a second processing unit 6, a second functional unit 7, a second management unit 8, a first processing unit 9, a first functional unit 10, a first management unit 11, a second memory unit 12.

Mobile communication is a type of radiotelephone communication where the end devices (mobile communication devices) transmit a signal to each other over a mobile network, which is a set of special receiver-transmitters (base stations). The base stations connect to each other using fixed-line communication channels or using radio waves, and to serviced mobile communication devices using radio waves (information is provided in the source https://dic.academic.ru/dic.nsf/es/82809/MOBHJIbHAiI, accessed on Oct 12, 2017).

A mobile communication device is a radio-technical device that allows for communication with other devices over a mobile network. The mobile communication device is a complex electronic device consisting of many interconnected units and modules arranged in a housing. In a particular case, the elements of a mobile communication device are a touch screen 1, an identification data module 3, a photo capture module 2, a receiving-transmitting unit 4, a first processing unit 9, a first management unit 11, a power supply unit, and a second memory unit 12 (http://highscreen.ru/news/Ustroistvo_smartfona/, accessed on Oct 13, 2017). Furthermore, the mobile communication device may further include any of the following elements: a speaker, a microphone, a push-button switch, connectors for connecting other devices, or connectors for connecting to other devices. The main function, as discussed within the framework of the technical solution, of the mobile communication device is the interaction with a mobile network such that the possibility of exchanging signals with other mobile communication devices is provided. One can use, for example, a smartphone, a PDA (a pocket personal computer that can function as a mobile phone), or a tablet computer as a mobile communication device.

"User" hereinafter shall be understood to mean a person who uses a certain mobile communication device and registers in a mobile network in its own name using the proposed technical solution. However, it will be appreciated that any person, not necessarily the user, can perform the actions described below using the proposed technical solution.

The main elements of the system are a touch screen 1, an identification data module 3, a photo capture module 2, a receiving-transmitting unit 4, a first processing unit 9, a first management unit 11, a first memory unit 12 and a power supply unit (all being included in the mobile communication device), as well as a receiving-transmitting unit 4, a second processing unit 6, a second management unit 8, a power supply unit, and a second memory unit 5 (all being included in the mobile carrier's equipment).

The touch screen 1 is a touch-responsive device (or a device element) that provides for displaying visual information and touch input of information. The sensitive portion of the touch screen 1 is a set of distinct sensors. The touch screen 1 is configured for entering the user's signature and acquiring information about the appearance of the signature, as well as about the dynamics of signing by the user (speed, pressure force, rotation radii, continuity, etc.). "Entering a signature" shall be understood to mean the conversion of the user's tactile pressure into an electrical signal of a certain duration. In this case, the electrical signal of a certain duration fully corresponds to a file of a certain graphic format, comprising data corresponding to the graphic image of the signature, optionally taking into account the dynamics of signing. Also provided is a possibility to enter text information into specially formed groups of sensors (i.e. entry fields) using dedicated groups of sensors, each of which corresponds to a specific character, letter, number, punctuation mark (i.e. using a virtual keyboard). The presence of the touch screen 1 provides for a possibility to enter the user's signature, which cannot be provided by conventional screens designed only for displaying information.

The identification data module 3 is an element included in the device, which provides for storing unique identification data (for example, one or more identification numbers, codes) and provides for protection against unauthorized access to this identification data so as to prevent misuse. "Protection" shall be understood to mean the actual impossibility of changing, deleting, adding identification information of its own accord or at the initiative of one of the parties (the user, the mobile network carrier) without the consent of the other party, as well as the impossibility of access thereto by an entity other than the mobile network carrier or user. The identification data module 3 can either be a single element or consist of several distinct elements that are electrically connected in any manner. The identification data module 3 is disposed in the mobile communication device, in a dedicated area. The identification data module 3 can be configured to be removable from the mobile communication device, or to be non-removable. Also, the identification data module 3 can be configured for changing (in case of legitimate use, i.e. with the consent of all interested parties) the identification data, or without a possibility of changing. One can use a most common physical SIM card, an electronic SIM (also hereinafter referred to as e-SIM or SIM in the form of a chip), or a dedicated partition in the first memory unit 12 of the mobile communication device, which partition is protected in a special manner, as described above, as the identification data module 3. For each specific embodiment of the identification data module 3, the design of the mobile communication device is adapted such that the correct operation of the identification data module 3 is ensured.

When a traditional physical SIM card of various formats (for example, mini-SIM, micro-SIM, nano-SIM) is used as the identification data module 3, a special holder is provided in the mobile communication device, which provides for physical disposition of the SIM card and comprises contacts (a connector) for connecting to the contacts of the SIM card. When e-SIM is used as the identification data module 3, the mobile communication device provides a special seat for disposing the chip, which comprises contacts for connecting to e-SIM contacts, wherein said contacts are connected to each other and configured to be non-openable, for example, using soldering. When a dedicated partition in the first memory unit 12 of the mobile communication device is used as the identification data module 3, protection of said dedicated partition is provided such that the identification data stored therein is protected as described above. Using the identification data module 3 in the form of an e-SIM or a dedicated partition in the first memory unit 12 of the mobile communication device allows for changing identification data (for example, when changing the carrier) without replacing the identification data module 3, i.e. allows for reduction of material costs when replacing data.

The identification data module 3 can be further provided with material carriers comprising identification data in a form that allows them to be visually perceived and recognized, for example, in the form of a code, in particular, a barcode and a number corresponding thereto (in particular, a physical SIM card, prior to being disposed in a mobile communication device, typically comes in a plastic card with dimensions 54x86x0.76 mm). In this case, the identification data is typically encrypted in a special manner.

The photo capture module 2 (which can also be referred to as a photo-video photo capture module) is a portion of the device that provides for acquisition of a photo image and a video image of the desired objects. In the discussed case, the term "shooting" shall be understood to mean, inter alia, the process of imaging, capturing something in any manner (in accordance with definition 15 as provided in the source https://dic.academic.ru/dic.nsf/ushakov/1032590, accessed on Oct 13, 2017). One of the main elements of the photo capture module 2 is the optical system. The photo capture module 2 is disposed in the housing of the mobile communication device such that the optical system is facing outward, i.e. outside the housing of the mobile communication device. In a particular case, the mobile communication device may include two photo capture modules facing in opposite directions with the optical systems thereof. A camera configured to acquire video and photo images is typically used as the photo capture module 2. In this case, the photo capture module 2 has to be configured to produce the files in certain graphic formats, which correspond to the photo images of a personal identity document, a material carrier code, user's video images, i.e. possess characteristics that provide for acquisition of high-quality (high-contrast, sharp, with the required resolution) photo and video images. Moreover, the file of a certain graphic format shall be understood to mean an electrical signal corresponding to the data of the photo and video images being acquired. The presence of photo capture module 2 prevents forgery of data during registration, as it allows for acquiring real time data (photo of a real person in front of the photo capture module 2 and of a document that the person has at this point in time).

The first management unit 11 is an element that manages all other elements of the mobile communication device. The first processing unit 9 is an element that provides for the required processing of data as necessary for normal functioning of the mobile communication device. The first processing unit 9 and the first management unit 11 can be structurally combined into a first functional unit 10. A microprocessor can be used as the first functional unit 10, including the one having its own memory and software. The first functional unit 10 may not have own memory, but may use the first memory unit 12 within the mobile communication device.

The first memory unit 12 is a data storage element. A partition for storing therein the identification data, i.e., in a particular implementation of the identification data module 3, can be provided in the first memory unit 12. The first memory unit 5 may further store data of photo images and video images acquired by the photo capture module 2, data corresponding to the information entered by means of the touch screen 1.

The second processing unit 6 is a complex device consisting of several interconnected elements or one element and allowing to conduct all the required processing of data acquired from the mobile communication device. The second processing unit 6 may comprise elements that allow to perform the following functions: recognizing the barcode on the photo image of a material carrier accompanying the identification data module 3, verifying against forgery by recognizing signs of authenticity of a personal identity document (typically a passport) according to the photo image of the document acquired by the photo capture module 2, recognizing the text data and owner's photo image in the photo image of the passport acquired by the photo capture module 2, verifying for the presence of a real user in front of the photo capture module 2 according to the video image from the photo capture module 2, forming a high-quality photo image of the user in front of the photo capture module 2 from the video from the photo capture module 2, comparing the photo image recognized in the passport photo with the photo image formed from the video image, forming a user profile (i.e. forming a link between the identification data of the identification data module 3 and user's personal data in the form of passport data and a signature). Each element within the second processing unit 6 can further be configured as a separate element. Some elements within the second processing unit 6 can be grouped and presented as a single device or configured as a single device. Furthermore, the second processing unit 6 can be configured as a computing device that uses programs installed in the second memory unit 5 of the program (or a single program), wherein each program performs the functions of the corresponding element within the second processing unit 6 (or performs the required processing as a whole). In this case, the second memory unit 5 is included in the second processing unit 6, or the second processing unit 6 itself comprises a corresponding element that is identical in terms of the function to the second memory unit 5.

In particular, the LUNA SDK software (https://visionlabs.ai/ru/luna-sdk-info.html, accessed 06.06.2018) can be used to ensure verification of the presence of a real user in front of the photo capture module 2 based on the video image from the photo capture module 2. Said verification is ensured by performing procedures based on interactive recognition of blinking, smiling, and moving the face closer to/farther from the camera. To ensure verification against the forgery of document, for example, fields in the document can be verified (when any data is substituted in the passport, fields are violated).

The second management unit 8 is an element that manages all other elements: the second processing unit 6, the second memory unit 5, and the receiving-transmitting unit 4.

The second processing unit 6 and the second management unit 8 can be structurally configured as separate elements connected in some manner, or as parts of a single element, i.e. the second functional unit 7. A processor can be used as the second functional unit 7, including the one having own memory and software. The second functional unit 6 may not contain own memory, but use the second memory unit 5.

The second memory unit 5 is a data storage element. The second memory unit 5 may store data of photo and video images acquired from the mobile communication device by means of the receiving-transmitting units 4, the information recognized therein, data of the information entered by means of the touch screen 1 and acquired from the mobile communication device by means of the receiving-transmitting units 4.

The receiving-transmitting unit 4 is an element that provides for the reception of signals from a mobile network and transmission of the mobile network signals, typically by means of radio waves or over a cable, or by means of their combination.

The power supply unit is a device for supplying all elements with electricity. For example, batteries can be used as power supply units.

A microphone is a device for detecting acoustic vibrations in the air medium and measuring parameters thereof (Ultrasound. Malenkaya entsiklopediia. Chief ed. I. P. Goliamina. - M.: Sovetskaya entsiklopediia, 1979, 400 pages, p. 270).

A speaker is a device for converting electrical vibrations into sound vibrations (according to the Encyclopedic dictionary https://dic.academic.ru/dic.nsf/es/19254^HHaMHK, accessed on Oct 24, 2017). The speaker is located in the housing of the mobile communication device such that the wide portion of the speaker diffuser faces the holes in the housing and the sound from the speaker passes through these holes.

A push-button switch is a switch that trips (closes or opens an electrical circuit) as a result of the (typically axial) movement of the actuator in the form of a button after applying thereon the pressure force of a human operator (in accordance with GOST 22614-77 "Key-actuated and push-button switches and commutators. General ergonomic requirements"). The push-button switches are disposed in holes in the housing of the mobile communication device, moreover, the push-button switches can be disposed in any portion of the housing, which is free from other elements.

A connector is a means of connecting external and internal electrical circuits intended for transmitting information or energy from corresponding elements of the mobile communication device, in the form of an electrical signal, or thereto.

Each of the elements of the mobile communication device is disposed in the housing such that other elements of the mobile communication device do not interfere with normal functioning thereof. The identification data module 3, the module 2, the touch screen 1 are connected to the first management unit 11 and configured to transmit corresponding electrical signals thereto and to acquire management signals therefrom. The touch screen 1 is electrically connected to the first memory unit 12 directly or via the first management unit 11 and configured to transmit signals thereto or to acquire signals therefrom. The first processing unit 9 is connected to the identification data module 3, the photo capture module 2, the touch screen 1 and configured to acquire electrical signals therefrom, and is also electrically connected to the first management unit 11. One of the receiving-transmitting units 4 is connected to the first management unit 11 and configured to acquire signals therefrom and to transmit signals thereto, and is also electrically connected to the first memory unit 12 and the first processing unit 9 directly or via the first management unit 11. The first memory unit 12 is electrically connected to the first processing unit 9 directly or via the first management unit 11 and configured to acquire data therefrom and to transmit data thereto. All energy-dependent elements of the mobile communication device are connected to a corresponding power supply unit. Also, if there are additional elements in the mobile communication device, their connection to the corresponding other elements of the mobile communication device is provided.

Elements of the mobile carrier's equipment can be installed in one housing, or each of the elements can be installed in a separate housing. The second processing unit 6 is electrically connected to the second management unit 8, electrically connected to the second of the receiving-transmitting units 4 and to the second memory unit 5 directly or via the second management unit 8. The receiving-transmitting unit 4 and the second memory unit can also be electrically connected to the second management unit 8 and configured to acquire management signals therefrom. All energy-dependent elements are connected to a corresponding power supply unit.

### Brief description of the drawings

The invention is explained by a drawing showing a block diagram of the device.

Industrial applicability and embodiments of the invention

In the event that the above elements and means are used, the invention is implemented as follows.

All elements included in the proposed technical solution are widely known and do not require special manufacturing (for example, various touch screens 1 are provided in the source https://sensis.ru/cat/sensornoe-oborudovanie/sensornye-ekrany/, accessed on Oct 24, 2017, the portions of the housing are provided in the source https://www.partsdirect.ru/smartphones/spareparts_smartphone/, accessed on Oct 24, 2017, the photo capture module 2 is provided in the source https://addroid.ru/remont_zapchasti/smartfony/kamery/, accessed on Oct 24, 2017, the power supply unit 9 is provided in the source https://addroid.ru/remont_zapchasti/smartfony/akkumulyatory/, accessed on Oct 24, 2017).

All elements of the mobile communication device, with the exception of the identification data module 3 when it is configured as a physical SIM card, are connected to each other and installed in the housing as described above. Afterwards, the desired software (at least an operating system) is installed on the mobile communication device. The operating system is typically assembled and installed at the manufacturer of the mobile communication device, and all the necessary software may be installed at the manufacturer. The rest of the software can also be installed by the sellers of the mobile communication device or by the user himself after being downloaded, for example, from the Internet over a network, in particular, Wi-Fi.

The remaining elements of the proposed system, i.e. the equipment elements located on the side of the mobile carrier, are connected to each other as described above, and disposed accordingly (for example, in a certain room). Afterwards, the desired software, including the one that provides for the fulfilment of functions of the second processing unit 6, is installed in the second functional unit 7.

To use his mobile communication device, the user purchases a physical SIM card and, if available, its accompanying material carriers when the identification data module 3 is configured as a physical SIM card. When the identification data module 3 is configured as an electronic SIM card or as a dedicated memory partition, the user purchases only material carriers comprising identification data, typically in an encrypted form. Moreover, the places of purchase within the scope of the proposed technical solution are not limited to the sales offices of the mobile network carrier, but can be different (for example, a vending machine on the street or indoors, a grocery store, a supermarket or a hypermarket, etc.). This is due to the fact that the conclusion of a communication services agreement and, accordingly, the registration of the identification data module 3 may not be performed at the place of purchase, as there is no need for the presence of a carrier's representative for the verification of the incoming information.

During registration, there is no need to dispose the identification data module 3 in the mobile communication device if the identification data module 3 is configured as a physical SIM card, or there is no need to enter the identification data to the identification data module 3 if it is configured as an electronic SIM card or as a dedicated memory partition. Depending on whether the user performs the actions as specified in the previous sentence, the list of actions when using the technical solution will differ, the differences are described below. In addition, cases are discussed when the mobile communication device, before it started to be used, did not comprise the identification data module 3 with identification data.

If the user disposes the identification data module 3, when it is configured as a physical SIM card, in the mobile communication device, or adds the identification data to the identification data module 3, when it is configured as an electronic SIM card or a dedicated memory partition, the user performs the following actions.

When the identification data module 3 is configured in the form of a physical SIM card, the user disposes the identification data module 3 (the physical SIM card) in a special holder in the mobile communication device, wherein the contacts of the physical SIM card should be in contact with the contacts of the special holder. When the identification data module 3 is configured in the form of an electronic SIM card or a dedicated memory partition, the user adds the identification data from the accompanying material carriers to the identification data module 3 in such a manner as it is envisaged by the type of the identification data module 3. For example, in the case of an electronic SIM card, the material carrier may comprise a code to be entered by the user to the first functional unit 10 via the touch screen 1. Said code is transmitted using the receiving-transmitting unit 4 of the mobile communication device to a special server, data (including identification data) from a mobile carrier is sent from the server in response, which data is sent to the server upon request by a special service. Said data is stored in an electronic SIM card. Information on the principle of loading data to an electronic SIM card is provided in the source http://ichip.ru/chip-vmesto-sim-kart.html, accessed on Oct 26, 2017.

Afterwards, software that provides registration is launched in the first functional unit 10. Said software can be launched either automatically or manually by the user. For example, when the mobile communication device is turned on, the first functional unit 10 can provide for the detection of the identification data module 3, determination of a status thereof (whether it is registered or not) by sending a signal to the mobile network, and launching of software when the identification data module 3 with identification data is not present or not registered. Also, the user can launch the software by himself after turning on the mobile communication device by applying force onto a group of sensors of the touch screen 1, which group provides for sending a launch signal to the first functional unit 10, or by applying force onto a push-button switch which provides the same function. By means of sensors (or groups of sensors) of the touch screen 1 the interface of said software is displayed, which interface allows the user to add the desired information, including using other elements of the mobile communication device, for example, the photo capture module 2.

Also, actions are performed while the software is running, where the order of actions can be changed. The identification data of the identification data module 3 is entered to the first functional unit 10. If the user has disposed the identification data module 3, when it is configured as a physical SIM card, in the mobile communication device, or has added the identification data to the identification data module 3, when it is configured as an electronic SIM card or a dedicated memory partition, the first functional unit 10 acquires a signal (by sending a requesting signal beforehand) from the identification data module 3, corresponding to the identification data. If the user has not disposed the identification data module 3 in the mobile communication device or has not added the identification data, the user can enter the identification data (e.g. a number corresponding to the barcode on the material carrier) by himself by applying force on groups of sensors corresponding to the characters of the virtual keyboard.

The user can also acquire a photo image of the material carrier with visually displayed identification data by means of the photo capture module 2. The signal corresponding to the entered identification data or photo image of the material carrier is sent from the photo capture module 2 to the first functional unit 10 or the first memory unit 12 to be further transmitted to the second functional unit 7 by means of the receiving-transmitting units 4. If a signal corresponding to the photo image is acquired, the second functional unit 7 further performs the actions that ensure the recognition of identification data in the photo image of the material carrier (for example, barcode recognition). The second functional unit 7 provides for at least temporary storage of identification data (typically in encrypted form), until the registration is completed, in its own memory, or in the second memory unit 5 (to this end, a corresponding signal is sent to it).

Afterwards, the user enters the information from a personal identity document (typically a passport) to the first functional unit 10 or to the first memory unit 12. To this end, the user acquires a photo image of the document by means of the photo capture module 2. The signal corresponding to the photo image of the document is sent from the photo capture module 2 to the first functional unit 10 or the first memory unit 12 to be further transmitted to the second functional unit 7 by means of the receiving-transmitting units 4. Based on the acquired photo image of the document, the verification of the fact that an original document has been presented (that the whole document or a portion thereof is not forged) is performed in the second functional unit 7. Also, the text information from the document, typically the last name, first name, patronymic, document number and other information as required, and the photo image of the owner contained in the document are recognized in the second functional unit 7.

The second functional unit 7 provides for at least temporary storage of the text information and photo image from the document, until the registration is completed, in its own memory, or in the second memory unit 5 (to this end, a corresponding signal is sent to it).

Afterwards, the information about the person conducting the registration, i.e. being in front of the photo capture module 2 is entered to the first functional unit 10 or to the first memory unit 12. To this end, the user, using the photo capture module 2, acquires a video image of himself (i.e. multiple consecutive photo images) with a duration sufficient to perform the following actions as described. The signal corresponding to the video image of the user is sent from the photo capture module 2 to the first functional unit 10 or the first memory unit 12 to be further transmitted to the second functional unit 7 by means of the receiving-transmitting units 4. Based on the user's video image acquired, a verification whether a real person is present in front of the photo capture module 2 (not a screen with a recorded video image, or a printed photo image) is performed in the second functional unit 7. Also, one frame (photo image) is selected from the frames (photo images) of the video image or a user's photo image that is most suitable for comparison with the photo image from the document (i.e. it is sufficiently clear, contrast, bright) is generated in the second functional unit 7. The second functional unit 7 provides for at least temporary storage of the user's photo image from the video image, until the registration is completed, in its own memory or in the second memory unit 5 (to this end, a corresponding signal is sent to it). Afterwards, in order to ensure obtaining a conclusion whether the same person or different persons are shown on said photo images, the user's photo image from the document and the user's photo image from the video image are compared in the second functional unit 7. Registration is only possible if the same person is shown on said photo images.

Afterwards, the information on the user's signature is entered to the first functional unit 10 or to the first memory unit 12. To this end, the user applies force on the touch screen 1 with a finger or a special element (for example, a stylus) by signing, i.e. by putting a signature on the touch screen 1. In this case, the signature is a reflection of the individual psychomotor behavior of a particular person, which is always unique for each subject. Information about the user's signature comprises information about the appearance of the signature, as well as about the dynamics of signing by the user (speed, pressure force, curve radii, continuity, etc.). The signal corresponding to the file with the user's signature data is transmitted to the second functional unit 7 by means of the receiving-transmitting units 4. The second functional unit 7 provides for at least temporary storage of the user's signature information, until the registration is completed, in its own memory or in the second memory unit 5 (to this end, a corresponding signal is sent to it).

Sending the signals corresponding to the acquired above data to the second functional unit 7 by means of the receiving-transmitting units can be performed both immediately after acquiring each type of data (i.e. sequentially) and only after acquiring all said data. In this case, the verification of the fact that all the required information has been acquired is performed in the first functional unit 10 or in the second functional unit 7 when data is sent sequentially. If all acquired data is sent simultaneously, said verification is performed in the second functional unit 7.

After the second functional unit 7 acquires all the required information, entering of which is mentioned above, as well as after all said verifications are successfully performed, a registration completion signal that provides for the possibility of further use of the mobile communication device as intended is sent from the second functional unit 7 to the mobile communication device via the receiving-transmitting units 4.

Also, a user profile file can be formed in the second functional unit 7. If the acquired information is stored in the second memory unit 5, the signals corresponding to the acquired information are preliminarily sent from the second memory unit 5 to the second functional unit 7. To form the profile file, a correspondence is established between the acquired identification data of the identification data module 3, document information, and signature information. Afterwards, a signal corresponding to the profile file is sent from the second functional unit 7 to the second memory unit 5 for further storage. The signal corresponding to the profile file can also be sent via the receiving-transmitting unit 4 to other equipment of the mobile carrier, which provides for permanent data storage.

Thus, the implementation of the technical solution (in this case, of the system) in the manner described above ensures extending the range of functional possibilities by ensuring authentication of the user's identity. This is due to the fact that the proposed system provides for the photo capture of the user and user's identity document, recognition of a real person in the acquired video image (the fact that the object in front of the module is not a photo), recognition of the photo image of the user and the document information on the acquired photo image of the document, and comparing the user on the photo image from the document with the user from the video image. Furthermore, due to the fact that data is acquired and processed by means of the system without manually entering text data and manually uploading files with photo images or video images, a higher speed of user registration in the mobile carrier's network is ensured.

## Claims

1. A system for remote registration of mobile users, comprising an identification data module, a photo capture module, a touch screen, a first processing unit, a first management unit, a first memory unit, a second processing unit, a second management unit, a second memory unit, and two receiving-transmitting units, the touch screen being configured for entering text data and to convert the tactile force when a person signs on this touch screen into a file of a relevant graphic format, the photo capture module being configured to produce a file of a relevant graphic format corresponding to the photo image of a document, a file of a relevant graphic format corresponding to the photo image of a code, and a file of a relevant graphic format corresponding to the video image of a person; **characterized in that** the second processing unit is configured to recognize the features of authenticity of a document; wherein the second processing unit is further configured to recognize a code in the file corresponding to the photo image of a code, to recognize the photo image of a person and text data in the file corresponding to the photo image of a document, to recognize the photo image of a person in the file corresponding to the video image of a person, to compare the recognized photo image of a person from the file corresponding to the image of a document with one of the recognized photo images of a person in the file corresponding to the video image of a person, to compare the photo images of a person in the file corresponding to the video image of a person to verify that this is the image of a living person in reality at the time of photo capture, wherein the first processing unit is connected and configured to acquire signals from the identification data module, the photo capture module and the touch screen, the first memory unit is connected and configured to acquire signals from the first processing unit, the photo capture module and the touch screen, one of the receiving-transmitting units is connected and configured to acquire signals from the first processing unit and the first memory unit and to transmit the signals acquired from the other receiving-transmitting unit to the first management unit and the first processing unit, the first management unit is connected and configured to transmit management signals to the photo capture module, the touch screen, the first processing unit, the first memory unit; the second processing unit is connected and configured to acquire signals from the other receiving-transmitting unit, the second memory unit is connected and configured to acquire signals from the second processing unit, the other receiving-transmitting unit is connected and configured to acquire signals from the second processing unit, the second management unit is connected and configured to transmit management signals to the second processing unit and the second memory unit, the receiving-transmitting units are configured to exchange signals between each other by means of transmission of radio signals.

2. A method for remote registration of a mobile user by means of a mobile communication device provided with a photo capture module and a touch screen, **characterized in that** a mobile user's identity document is photographed by means of the photo capture module, thereby forming an electronic file corresponding to the image of the mobile user's identity document, the presence of the signs of authenticity of this document in the file corresponding to the image of the mobile user's identity document is verified, the text data from the electronic file corresponding to the image of the mobile user's identity document is recognized; a signature of the mobile user on the touch screen is formed, thereby generating a file corresponding to the signature of the mobile user, wherein at the step of setting correspondence, correspondence is set between the identification data, the recognized text data from the electronic file corresponding to the image of the mobile user's identity document, and the file corresponding to the signature of the mobile user; video recording of the mobile user is performed or the mobile user is photographed by means of the photo capture module, thereby forming an electronic file corresponding to the video record or the photo image of the mobile user, by means of the second processing unit the image of the mobile user from the file corresponding to the image of the mobile user's identity document is compared with the image of the mobile user from the file corresponding to the video record or the photo image of the mobile user to check whether these images of the mobile user correspond to the same person, the identification data is stored, the file corresponding to the image of the mobile user's identity document is stored, the text data from the electronic file corresponding to the image of the mobile user's identity document is stored, correspondence is set between the identification data, the recognized text data from the electronic file corresponding to the image of the mobile user's identity document, a signal about completion of the procedure of remote registration of the mobile user is formed.

3. The method according to claim 2, **characterized in that** video recording of the mobile user is performed by means of the photo capture module, thereby forming an electronic file corresponding to the video record of the mobile user, the method further comprising a step of verifying the presence in the electronic file corresponding to the video record of the mobile user of signs of the fact that there was performed video recording of a mobile user who was in front of the photo capture module at the time of video recording.

## Patentansprüche

1. System zur Fernanmeldung von Benutzern eines Mobilfunknetzes, umfassend ein Identifikationsdatenmodul, ein Fotoerfassungsmodul, einen Touchscreen, eine erste Verarbeitungseinheit, eine erste Verwaltungseinheit, eine erste Speichereinheit, eine zweite Verarbeitungseinheit, eine zweite Verwaltungseinheit, eine zweite Speichereinheit und zwei Empfangs-/Sendeeinheiten, wobei der Touchscreen darauf ausgelegt ist, Textdaten einzugeben und die taktile Kraft, wenn eine Person auf diesem Touchscreen unterschreibt, in eine Datei mit einem entsprechenden Grafikformat umzuwandeln, wobei das Fotoerfassungsmodul darauf ausgelegt ist, eine Datei mit einem entsprechenden Grafikformat, die dem Fotobild eines Dokuments entspricht, eine Datei mit einem entsprechenden Grafikformat, die dem Fotobild eines Codes entspricht, und eine Datei mit einem entsprechenden Grafikformat, die dem Videobild einer Person entspricht, zu erstellen; **dadurch gekennzeichnet, dass** die zweite Verarbeitungseinheit darauf ausgelegt ist, die Echtheitsmerkmale eines Dokuments zu erkennen; wobei die zweite Verarbeitungseinheit außerdem darauf ausgelegt ist, einen Code in der Datei zu erkennen, die dem Fotobild eines Codes entspricht, das Fotobild einer Person und Textdaten in der Datei zu erkennen, die dem Fotobild eines Dokuments entspricht, das Fotobild einer Person in der Datei zu erkennen, die dem Videobild einer Person entspricht, das erkannte Fotobild einer Person aus der Datei, die dem Bild eines Dokuments entspricht, mit einem der erkannten Fotobilder einer Person in der Datei, die dem Videobild einer Person entspricht, zu vergleichen, die Fotobilder einer Person in der Datei, die dem Videobild einer Person entspricht, zu vergleichen, um zu verifizieren, dass dies das Bild einer lebenden Person in der Realität zum Zeitpunkt der Fotoaufnahme ist, worin die erste Verarbeitungseinheit verbunden und darauf ausgelegt ist, Signale von dem Identifikationsdatenmodul, dem Fotoerfassungsmodul und dem Touchscreen zu erfassen, die erste Speichereinheit verbunden und darauf ausgelegt ist, Signale von der ersten Verarbeitungseinheit, dem Fotoerfassungsmodul und dem Touchscreen zu erfassen, eine der Empfangs-/Sendeeinheiten verbunden und darauf ausgelegt ist, Signale von der ersten Verarbeitungseinheit und der ersten Speichereinheit zu erfassen und die von der anderen Empfangs-/Sendeeinheit erfassten Signale an die erste Verwaltungseinheit und die erste Verarbeitungseinheit zu übertragen, die erste Verwaltungseinheit verbunden und darauf ausgelegt ist, Verwaltungssignale an das Fotoerfassungsmodul, den Touchscreen, die erste Verarbeitungseinheit und die erste Speichereinheit zu übertragen; die zweite Verarbeitungseinheit verbunden und darauf ausgelegt ist, Signale von der anderen Empfangs-/Sendeeinheit zu erfassen, die zweite Speichereinheit verbunden und darauf ausgelegt ist, Signale von der zweiten Verarbeitungseinheit zu erfassen, die andere Empfangs-Sendeeinheit verbunden und darauf ausgelegt ist, Signale von der zweiten Verarbeitungseinheit zu erfassen, die zweite Verwaltungseinheit verbunden und darauf ausgelegt ist, Verwaltungssignale an die zweite Verarbeitungseinheit und die zweite Speichereinheit zu übertragen, die Empfangs-/Sendeeinheiten darauf ausgelegt sind, Signale untereinander mittels Übertragung von Funksignalen auszutauschen.

2. Verfahren zur Fernanmeldung eines Benutzers eines Mobilfunknetzes mittels eines mobilen Kommunikationsgeräts, das mit einem Fotoerfassungsmodul und einem Touchscreen ausgestattet ist, **dadurch gekennzeichnet, dass** ein Ausweis eines Benutzers eines Mobilfunknetzes mittels des Fotoerfassungsmoduls fotografiert wird, so dass eine elektronische Datei gebildet wird, die dem Bild des Ausweises des Benutzers des Mobilfunknetzes entspricht, das Vorliegen der Echtheitsmerkmale dieses Dokuments in der Datei, die dem Bild des Ausweises des Benutzers eines Mobilfunknetzes entspricht, überprüft wird, die Textdaten aus der elektronischen Datei, die dem Bild des Ausweises des Benutzers eines Mobilfunknetzes entspricht, erkannt werden; eine Unterschrift des Benutzers eines Mobilfunknetzes auf dem Touchscreen gebildet wird, so dass eine Datei erstellt wird, die der Unterschrift des Benutzers eines Mobilfunknetzes entspricht, wobei bei dem Schritt des Einstellens der Entsprechung eine Entsprechung zwischen den Identifikationsdaten, den erkannten Textdaten aus der elektronischen Datei, die dem Bild des Ausweises des Benutzers eines Mobilfunknetzes entspricht, und der Datei, die der Unterschrift des Benutzers eines Mobilfunknetzes entspricht, eingestellt wird; eine Videoaufzeichnung des Benutzers eines Mobilfunknetzes durchgeführt wird oder der Benutzer eines Mobilfunknetzes mittels des Fotoerfassungsmoduls fotografiert wird, so dass eine elektronische Datei gebildet wird, die der Videoaufzeichnung oder dem Fotobild des Benutzers eines Mobilfunknetzes entspricht, mittels der zweiten Verarbeitungseinheit das Bild des Benutzers eines Mobilfunknetzes aus der Datei, die dem Bild des Ausweises des Benutzers eines Mobilfunknetzes entspricht, mit dem Bild des Benutzers eines Mobilfunknetzes aus der Datei, die der Videoaufzeichnung oder dem Fotobild des Benutzers eines Mobilfunknetzes entspricht, verglichen wird, um zu prüfen, ob diese Bilder des Benutzers eines Mobilfunknetzes der gleichen Person entsprechen, die Identifikationsdaten gespeichert werden, die Datei, die dem Bild des Ausweises des Benutzers eines Mobilfunknetzes entspricht, gespeichert wird, die Textdaten aus der elektronischen Datei, die dem Bild des Ausweises des Benutzers eines Mobilfunknetzes entspricht, gespeichert, werden, eine Entsprechung zwischen den Identifikationsdaten, den erkannten Textdaten aus der elektronischen Datei, die dem Bild des Ausweises des Benutzers eines Mobilfunknetzes entspricht, eingestellt wird, ein Signal über den Abschluss des Verfahrens der Fernanmeldung des Benutzers eines Mobilfunknetzes gebildet wird.

3. Verfahren nach Anspruch 2, **dadurch gekennzeichnet, dass** die Videoaufzeichnung des Benutzers eines Mobilfunknetzes mittels des Fotoerfassungsmoduls durchgeführt wird, so dass eine elektronische Datei gebildet wird, die der Videoaufzeichnung des Benutzers eines Mobilfunknetzes entspricht, wobei das Verfahren außerdem einen Schritt der Überprüfung des Vorliegens von Zeichen in der elektronischen Datei, die der Videoaufzeichnung des Benutzers des Mobilfunknetzes entspricht, umfasst, die anzeigen, dass eine Videoaufzeichnung eines Benutzers eines Mobilfunknetzes durchgeführt wurde, der sich zum Zeitpunkt der Videoaufzeichnung vor dem Fotoerfassungsmodul befand.

## Revendications

1. Système d'enregistrement à distance d'utilisateurs mobiles, comprenant un module de données d'identification, un module de prise de photo, un écran tactile, une première unité de traitement, une première unité de gestion, une première unité de mémoire, une deuxième unité de traitement, une deuxième unité de gestion, une deuxième unité de mémoire, et deux unités de réception-transmission, l'écran tactile étant configuré pour saisir des données textuelles et pour convertir la force tactile lorsqu'une personne signe sur cet écran tactile en un fichier d'un format graphique pertinent, le module de prise de photo étant configuré pour produire un fichier d'un format graphique pertinent correspondant à l'image photographique d'un document, un fichier d'un format graphique pertinent correspondant à l'image photographique d'un code, et un fichier d'un format graphique pertinent correspondant à l'image vidéo d'une personne ; **caractérisé en ce que** la deuxième unité de traitement est configurée pour reconnaître les caractéristiques d'authenticité d'un document ; où la deuxième unité de traitement est en outre configurée pour reconnaître un code dans le fichier correspondant à l'image photographique d'un code, pour reconnaître l'image photographique d'une personne et de données textuelles dans le fichier correspondant à l'image photographique d'un document, pour reconnaître l'image photographique d'une personne dans le fichier correspondant à l'image vidéo d'une personne, pour comparer l'image photographique reconnue d'une personne provenant du fichier correspondant à l'image d'un document avec l'une des images photographiques reconnues d'une personne dans le fichier correspondant à l'image vidéo d'une personne, pour comparer les images photographiques d'une personne dans le fichier correspondant à l'image vidéo d'une personne pour vérifier qu'il s'agit de l'image d'une personne vivante dans la réalité au moment de la prise de photo, où la première unité de traitement est reliée et configurée pour acquérir des signaux provenant du module de données d'identification, du module de prise de photo et de l'écran tactile, la première unité de mémoire est reliée et configurée pour acquérir des signaux provenant de la première unité de traitement, du module de prise de photo et de l'écran tactile, l'une des unités de réception-transmission est reliée et configurée pour acquérir des signaux provenant de la première unité de traitement et de la première unité de mémoire et pour transmettre les signaux acquis de l'autre unité de réception-transmission à la première unité de gestion et à la première unité de traitement, la première unité de gestion est reliée et configurée pour transmettre des signaux de gestion au module de prise de photo, à l'écran tactile, à la première unité de traitement, à la première unité de mémoire ; la deuxième unité de traitement est reliée et configurée pour acquérir des signaux provenant de l'autre unité de réception-transmission, la deuxième unité de mémoire est reliée et configurée pour acquérir des signaux provenant de la deuxième unité de traitement, l'autre unité de réception-transmission est reliée et configurée pour acquérir des signaux provenant de la deuxième unité de traitement, la deuxième unité de gestion est reliée et configurée pour transmettre des signaux de gestion à la deuxième unité de traitement et à la deuxième unité de mémoire, les unités de réception-transmission sont configurées pour échanger des signaux entre elles au moyen de la transmission de signaux radio.

2. Procédé d'enregistrement à distance d'un utilisateur mobile au moyen d'un dispositif de communication mobile équipé d'un module de prise de photo et d'un écran tactile, **caractérisé en ce que** le document d'identité d'un utilisateur mobile est photographié au moyen du module de prise de photo, formant ainsi un fichier électronique correspondant à l'image du document d'identité de l'utilisateur mobile, la présence des signes d'authenticité de ce document dans le fichier correspondant à l'image du document d'identité de l'utilisateur mobile est vérifiée, les données textuelles provenant du fichier électronique correspondant à l'image du document d'identité de l'utilisateur mobile sont reconnues ; une signature de l'utilisateur mobile sur l'écran tactile est formée, générant ainsi un fichier correspondant à la signature de l'utilisateur mobile, où, à l'étape d'établir la correspondance, la correspondance est établie entre les données d'identification, les données textuelles reconnues provenant du fichier électronique correspondant à l'image du document d'identité de l'utilisateur mobile, et le fichier correspondant à la signature de l'utilisateur mobile ; l'enregistrement vidéo de l'utilisateur mobile est effectué ou l'utilisateur mobile est photographié au moyen du module de prise de photo, formant ainsi un fichier électronique correspondant à l'enregistrement vidéo ou à l'image photographique de l'utilisateur mobile, au moyen de la deuxième unité de traitement l'image de l'utilisateur mobile provenant du fichier correspondant à l'image du document d'identité de l'utilisateur mobile est comparée à l'image de l'utilisateur mobile provenant du fichier correspondant à l'enregistrement vidéo ou à l'image photographique de l'utilisateur mobile afin de vérifier si ces images de l'utilisateur mobile correspondent à la même personne, les données d'identification sont stockées, le fichier correspondant à l'image du document d'identité de l'utilisateur mobile est stocké, les données textuelles provenant du fichier électronique correspondant à l'image du document d'identité de l'utilisateur mobile sont stockées, une correspondance est établie entre les données d'identification, les données textuelles reconnues provenant du fichier électronique correspondant à l'image du document d'identité de l'utilisateur mobile, un signal relatif à l'achèvement de la procédure d'enregistrement à distance de l'utilisateur mobile est formé.

3. Procédé selon la revendication 2, **caractérisé en ce que** l'enregistrement vidéo de l'utilisateur mobile est effectué au moyen du module de prise de photo, formant ainsi un fichier électronique correspondant à l'enregistrement vidéo de l'utilisateur mobile, le procédé comprenant en outre une étape de vérification de la présence dans le fichier électronique correspondant à l'enregistrement vidéo de l'utilisateur mobile de signes du fait que l'enregistrement vidéo d'un utilisateur mobile qui se trouvait devant le module de prise de photo au moment de l'enregistrement vidéo a été effectué.
